# EUROPÄISCHE PATENTANMELDUNG

(11) **EP 2 165 802 A2**
(43) Veröffentlichungstag der Anmeldung: **24.03.2010**
(21) Anmeldenummer: 09164003.7
(22) Anmeldetag: 29.06.2009
(51) Int. Cl.: B23Q 11/08

(54) **Teleskopabdeckung mit einer Dämpfungsbremse**

(30) Priorität: 17.09.2008 DE 102008047789
(71) Anmelder: Kabelschlepp GmbH, 57482 Wenden-Gerlingen (DE)
(72) Erfinder: Muransky, Milan, 940 01 Nove Zamky (SK); Takacs, Peter, 940 74 Nove Zamky (SK)
(74) Vertreter: Neumann, Ditmar

(57) **Zusammenfassung**

Abdeckung, insbesondere für einen Arbeitsbereich einer Werkzeugmaschine, umfassend wenigstens eine teleskopierbare Abdeckeinheit. Die teleskopierbare Abdeckeinheit ist gebildet durch wenigstens zwei Abdeckelemente, wobei ein Abdeckelement wenigstens eine Dämpfungseinheit aufweist. Die Dämpfungseinheit weist eine Halteplatte auf, die mit einer Wand eines Abdeckelementes verbunden ist. Die Dämpfungseinheit umfasst ferner einen um eine Achse verschwenkbaren Arm, der zur Anlage an einen Anschlag eines benachbarten Elementes bringbar ist. Mit der Halteplatte ist ein Dämpfungselement verbunden. Das Dämpfungselement übt während eines Verschwenkvorgangs des Armes auf die Achse ein Bremsmoment aus.

## Beschreibung

Der Gegenstand der Erfindung bezieht sich auf eine Abdeckung, insbesondere für einen Arbeitsbereich einer Werkzeugmaschine, umfassend wenigstens eine teleskopierbare Abdeckeinheit, welche wenigstens zwei Abdeckelemente aufweist, die relativ zueinander bewegbar sind.

Zum Schutz von Bauteilen, insbesondere von Bauteilen in einer Werkzeugmaschine, vorzugsweise zum Schutz von Führungsbahnen, vor Beschädigungen oder Verschmutzungen durch die Bearbeitung eines Werkstücks fallende Späne und Kühlschmiermittel etc. werden Abdeckungen verwendet. Es sind unterschiedliche Formen von Abdeckungen für einen Arbeitsbereich einer Werkzeugmaschine bekannt. So ist bspw. bekannt, dass für horizontale Bearbeitungsmaschinen Faltenbälge eingesetzt werden, die als Abdeckung dienen. Zum Schutz gegen Späne sind diese Faltenbälge mit Lamellen versehen, die an den Wänden der Faltenbälge befestigt sind.

Solche Faltenbälge können für die horizontale Bewegung bspw. einer Spindel mehrere Meter hoch werden. Die Bewegung solcher Faltenbälge ist nicht unproblematisch, insbesondere dann, wenn hohe Geschwindigkeiten und Beschleunigungen auftreten, da ein gleichmäßiges Auseinanderziehen und Zusammenschieben nicht möglich ist. Es kann auch zu Schwingungen und/oder zum Schlingern der Faltenbälge kommen.

Als Abdeckungen eines Arbeitsbereichs einer Werkzeugmaschine werden auch sogenannte Gliederschürzen eingesetzt. Sie bilden in dem Bereich, in dem Späne entstehen, eine geschlossene Oberfläche. Werden die Gliederschürzen jedoch im Wesentlichen in einer vertikalen Ebene angeordnet, so ist eine aufwendige Führung der Gliederschürzen notwendig. Die Gliederschürze wird jeweils für eine Bewegung an einer Seite aufgewickelt, was mittels eines Motors erfolgt. Solche Gliederschürzen können im Wesentlichen lediglich für Werkzeugmaschinen verwendet werden, bei denen eine relativ geringe Beschleunigung bzw. Verfahrgeschwindigkeit der Gliederschürze notwendig ist, da eine Gliederschürze oft nicht schnell genug aufgewickelt werden kann.

Zum Abdecken, insbesondere eines Arbeitsbereichs einer Werkzeugmaschine, werden auch sogenannte Teleskopabdeckungen verwendet. Jede Teleskopabdeckung weist teleskopartig ineinander schiebbare Abdeckelemente auf. Jedes Abdeckelement hat eine erste und eine zweite Seitenwand sowie eine mit den Seitenwänden verbundene Oberwand. Zum Schutz von im Wesentlichen horizontal verlaufenden Führungsbahnen einer Werkzeugmaschine werden die Abdeckelemente auf einem Führungsrand der Werkzeugmaschine geführt. Bei einer vertikalen Anordnung einer teleskopartig ausgebildeten Abdeckung wird diese seitlich geführt, um einen einwandfreien Lauf zu gewährleisten.

Besteht die Teleskopabdeckung aus mehreren beweglichen Kästen, so können diese synchron gekoppelt werden. Eine solche synchrone Koppelung der Kästen wird bspw. durch sogenannte Schergitter erreicht, die mit den Kästen verbunden sind.

Es sind auch Teleskopabdeckungen bekannt, bei denen die Kästen einzeln bewegbar sind. Hier erfolgt die Bewegung der Kästen dadurch, dass Mitnehmer oder Überlappungen der Kastenenden vorhanden sind, so dass ein Kasten einen benachbarten Kasten mitnehmen kann.

Eine synchrone Kopplung der Kästen hat den Nachteil, dass selbst bei sehr kurzen Verfahrbewegungen stets die gesamte Masse der Teleskopabdeckung bewegt werden muss.

Bei Teleskopabdeckungen, deren Kästen nicht synchron gekoppelt sind, werden die Kästen jeweils impulsförmig beschleunigt und abgebremst. Diese Betriebsweise einer Teleskopabdeckung hat verschiedene Nebenwirkungen. Unter anderem kann es hierbei zu Schwingungen in der Maschine durch die Impulse bzw. die Zusammenstöße der Kästen kommen. Solche Schwingungen können zur Folge haben, dass die Maschine nicht mehr exakt arbeitet und es daher zu Abweichungen in dem Bearbeitungsvorgang kommen kann.

Diese Problematik ist bekannt. Zur Vermeidung von Impulsen sowie der Geräuschemission während des Zusammenschiebens bzw. Auseinanderfahrens von Kästen ist bspw. durch die DE 197 17 867 A1 bekannt, eine Bremseinrichtung vorzusehen. Die Bremseinrichtung weist wenigstens einen an einem Abdeckkasten angeordneten Bremskörper und wenigstens einen an dem anderem Abdeckkasten angeordnete Bremsbacke auf. Jede Bremsbacke übt im Wesentlichen quer zur Bewegungsrichtung des Bremskörpers eine Bremskraft auf den Bremskörper aus. Hierdurch wird die Relativgeschwindigkeit zwischen den benachbarten Abdeckkästen verringert, vorzugsweise aufgehoben.

Eine weitere Ausgestaltung einer Teleskopabdeckung mit einer Dämpfung ist durch die DE 103 28 161 B4 bekannt. Bei dieser Teleskopabdeckung ist ein um eine Achse verschwenkbarer Hebel vorgesehen. Der Hebel weist eine Anschlageinrichtung auf, die mit einem Mitnehmer eines benachbarten Abdeckkastens zusammenwirkt. Die Anschlageinrichtung ist in Form eines Dämpfungselementes ausgebildet, die an einem freien Ende des Hebels angeordnet ist. Dem gegenüberliegenden Ende des Hebels ist ein weiteres Dämpfungselement zugeordnet. Das weitere Dämpfungselement ist aus einem elastischen Material ausgebildet, dessen Elastizität geringer ist als die des zur Anschlageinrichtung gehörenden Dämpfungselementes. Hierdurch können die auftretenden Anschlagkräfte auf eine größere Fläche verteilt werden, wodurch der Verschleiß der Dämpfungselemente gemindert werden soll.

Hiervon ausgehend liegt der vorliegenden Erfindung die Zielsetzung zugrunde, eine Abdeckung, insbesondere für einen Arbeitsbereich einer Werkzeugmaschine, umfassend wenigstens eine teleskopierbare Abdeckeinheit bereitzustellen, die auch für hohe Verfahrgeschwindigkeiten und Beschleunigungen geeignet ist.

Diese Aufgabe wird erfindungsgemäß durch eine Abdeckung, insbesondere für einen Arbeitsbereich einer Werkzeugmaschine, umfassend wenigstens eine teleskopierbare Abdeckeinheit mit den Merkmalen des Anspruchs 1 gelöst. Vorteilhafte Weiterbildungen und Ausgestaltungen der Abdeckung sind Gegenstand der abhängigen Ansprüche.

Die erfindungsgemäße Abdeckung, insbesondere für einen Arbeitsbereich einer Werkzeugmaschine umfasst wenigstens eine teleskopierbare Abdeckeinheit. Die teleskopierbare Abdeckeinheit ist gebildet durch wenigstens zwei Abdeckelemente, wobei ein Abdeckelement wenigstens eine Dämpfungseinheit aufweist. Die erfindungsgemäße Abdeckung zeichnet sich dadurch aus, dass die Dämpfungseinheit eine Halteplatte aufweist, die mit einer Wand eines Abdeckelementes verbunden ist. Die Dämpfungseinheit umfasst ferner einen um eine Achse verschwenkbaren Arm, der zur Anlage an einem Anschlag eines benachbarten Abdeckelementes bringbar ist. Mit der Halteplatte ist ein Dämpfungselement verbunden. Das Dämpfungselement übt während eines Verschwenkvorgangs des Armes auf die Achse ein Bremsmoment aus.

Durch diese erfindungsgemäße Ausgestaltung der Abdeckung wird erreicht, dass Schläge, Impulse etc., die beim Auseinanderziehen der teleskopierbaren Abdeckeinheit oder beim Zusammenschieben derselben stehen können. Insbesondere kann über die Länge des verschwenkbaren Armes der Bremsweg der Relativbewegung zwischen zwei benachbarten Abdeckkästen eingestellt werden.

Ein weiterer Vorteil der Erfindung kann darin gesehen werden, dass die teleskopierbare Abdeckeinheit in jeder Position vorspannungsfrei ist. Dies bedeutet, dass die Abdeckung auch für Transport und Montage auf eine minimale Größe zusammengeschoben werden kann.

Gemäß einer vorteilhaften Ausgestaltung der Abdeckung wird vorgeschlagen, dass wenigstens ein Endbereich des Armes mit einem Gleitelement versehen ist. Hierdurch wird die Reibung zwischen dem Arm und dem Anschlag minimiert. Bevorzugt ist dabei eine Ausgestaltung, bei der an wenigstens einem Endbereich des Armes eine Rolle vorgesehen ist.

Zur Begrenzung der Bewegung des Armes sowie zur Dämpfung desselben wird vorgeschlagen, dass die Halteplatte einen Dämpfer aufweist, an den der Arm bringbar ist.

Gemäß einer noch weiteren vorteilhaften Ausgestaltung der erfindungsgemäßen Abdeckung wird vorgeschlagen, dass das Dämpfungselement eine Mehrscheiben-Bremse ist. Durch eine Variation der Anzahl und Vorspannung der Scheiben kann der Dämpfungswert entsprechend den Anforderungen angepasst werden.

Das Dämpfungselement kann auch in Form einer hydrodynamischen Bremse ausgebildet sein.

Durch die Erfindung können nahezu beliebige Verzögerungs- und/oder Beschleunigungswerte erreicht werden, ohne dass ein Überschwingen, wie dies bei bekannten Teleskopabdeckungen der Fall sein kann, eintritt.

Weitere Vorteile und Einzelheiten der Erfindung werden anhand des in der Zeichnung dargestellten Ausführungsbeispiels erläutert, ohne dass der Gegenstand der Erfindung auf dieses konkrete Ausführungsbeispiel beschränkt wird.

### Es zeigen:

- Figur 1:: in einer perspektivischen Ansicht in einem ersten Zustand eine Dämpfungseinheit,
- Figur 2:: die Dämpfungseinheit nach Figur 1 in einem zweiten Zustand,
- Figur 3:: schematisch eine teleskopierbare Abdeckeinheit,
- Figur 4:: vergrößert Einzelheit A nach Figur 3,
- Figur 5:: die teleskopierbare Abdeckeinheit nach Figur 3 in einem zweiten Zustand,
- Figur 6:: Einzelheit A nach Figur 5,
- Figur 7:: die teleskopierbare Abdeckeinheit nach Figur 3 mit auseinander gezogenen Abdeckelementen,
- Figur 8:: Einzelheit A nach Figur 7,
- Figur 9:: eine teleskopierbare Abdeckeinheit mit teilweise auseinandergezogenen Abdeckelementen,
- Figur 10:: Einzelheit A nach Figur 9,
- Figur 11:: Einzelheit B nach Figur 9,
- Figur 12:: die Abdeckeinheit im zusammen geschobenen Zustand,
- Figur 13:: Einzelheit B nach Figur 12 und
- Figur 14:: perspektivisch eine Abdeckeinheit mit zwei Dämpfungseinheiten.

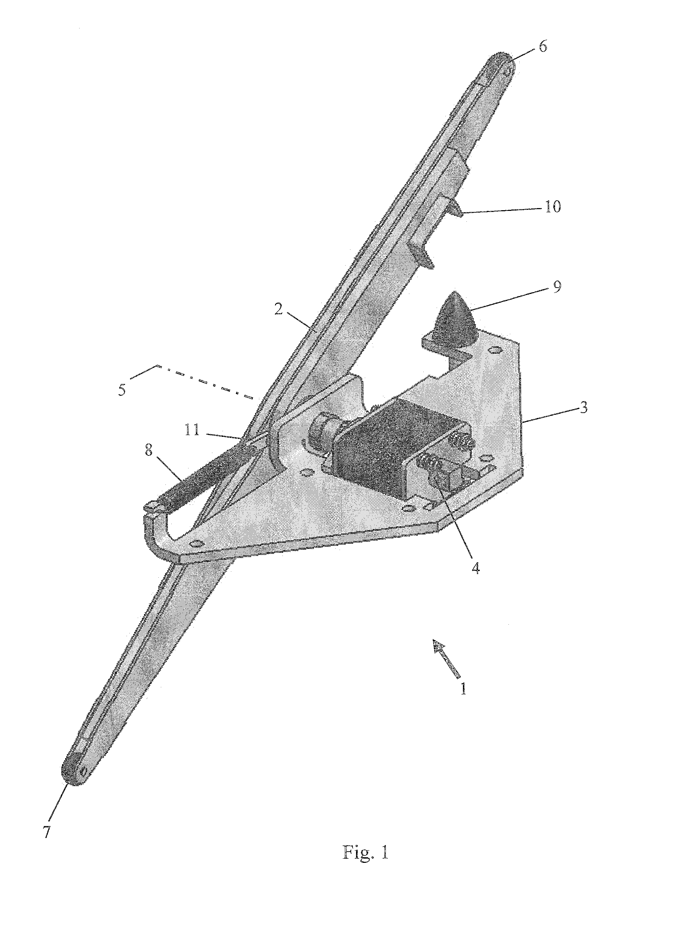

In der Figur 1 ist perspektivisch ein Ausführungsbeispiel einer Dämpfungseinheit dargestellt. Die Dämpfungseinheit 1 umfasst eine Halteplatte 3. Die Halteplatte 3 dient zur Festlegung der Dämpfungseinheit 1 an einer Wand, insbesondere einer Seitenwand eines Abdeckelementes. Hierzu weist die Halteplatte 3 entsprechende Befestigungsmöglichkeiten auf. Die Halteplatte 3 kann bspw. mit einer Wand eines Abdeckelementes verschraubt werden.

Mit der Halteplatte 3 ist ein Dämpfungselement 4 verbunden. Bei dem Dämpfungselement 4 handelt es sich vorzugsweise um eine Mehrscheibenbremse. Mit dem Dämpfungselement 4 ist ein Arm 2 verbunden. Der Arm 2 ist um eine Achse 5 verschwenkbar, insbesondere verdrehbar.

Aus der Darstellung nach Figur 1 ist ersichtlich, dass die Endbereiche des Armes 2 gabelförmig ausgebildet sind. Die gabelförmigen Ausbildungen der Endbereiche des Armes 2 bilden Aufnahmen für Rollen 6, 7, die jeweils verdrehbar um eine Achse sind. Die Rollen 6, 7 dienen zur Anlage an eine Wand eines benachbarten Abdeckelementes.

Es ist eine Rückzugfeder 8 vorgesehen. Die Rückzugfeder 8 ist mit einem Ende mit der Halteplatte 3 verbunden. Das andere Ende der Rückzugfeder 8 ist über eine Lasche 11 mit dem Arm 2 verbunden.

Die Darstellung nach Figur 1 zeigt des Weiteren, dass an der Halteplatte 3 ein Dämpfer 9 vorgesehen ist. Der Dämpfer 9 ist in dem dargestellten Ausführungsbeispiel im Wesentlichen kegelförmig ausgebildet. Dies ist nicht zwingend notwendig. Der Dämpfer 3 besteht vorzugsweise wenigstens teilweise aus einem elastischen Material. Dem Dämpfer 9 ist ein Anschlag 10 zugeordnet, der am Arm 2 ausgebildet ist. Der Anschlag 10 weist eine im Wesentlichen U-förmige Form auf.

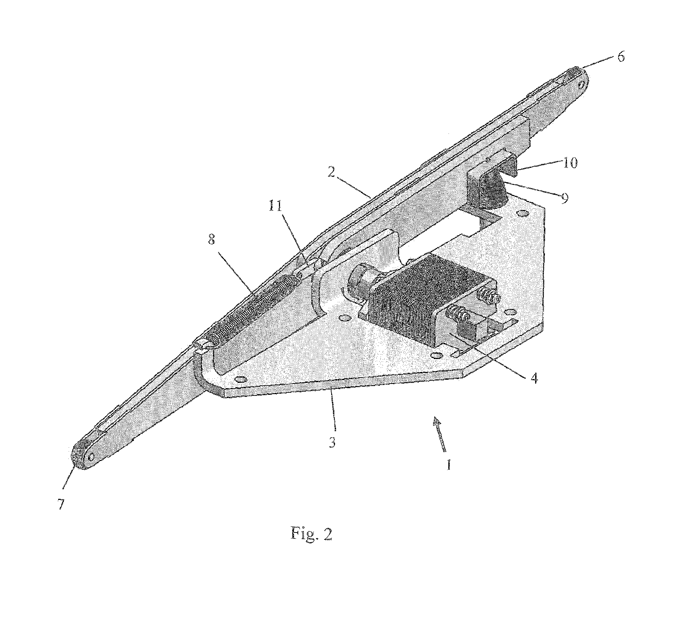

Durch Verschwenken des Armes 2 gelangt der Anschlag 10 zur Anlage an den Dämpfer 9, wie dies aus der Figur 2 ersichtlich ist. Hierbei wird auch die Rückholfeder 8 gespannt, so dass der Arm 2 in eine Ausgangslage gelangen kann.

Bei dem Dämpfungselement 4 handelt es sich, wie vorstehend ausgeführt, um eine Mehrscheibenbremse. Durch die Anzahl und Vorspannung der Scheiben kann der Dämpfungswert der Mehrscheibenbremse eingestellt werden. Darüber hinaus kann durch die Länge des Armes 2 der Bremsweg der Relativbewegung zweier zueinander benachbarter Abdeckelemente bestimmt werden. Darüber hinaus verfügt die Dämpfungseinheit über einen Freilauf in eine Richtung, wodurch eine beidseitige Wirkung Einschub und Auszug benachbarter teleskopierbarer Abdeckelemente erzielt wird.

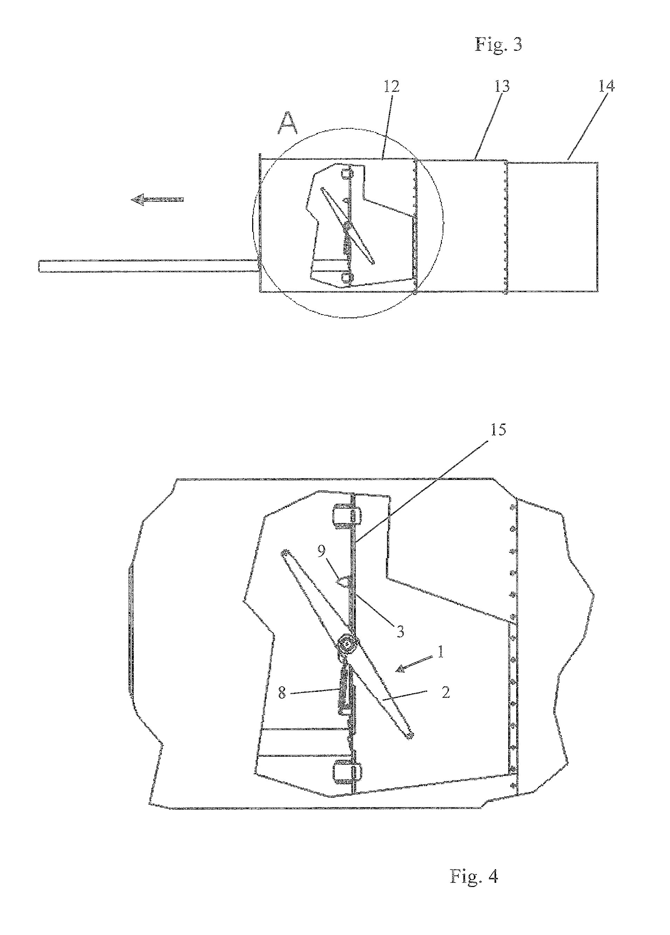

Die Arbeitsweise der Dämpfungseinheit 1 wird anhand der Figuren 3 bis 13 erläutert:

Figur 3 zeigt beispielhaft eine Abdeckung mit drei teleskopierbaren Elementen 12, 13 und 14. Das Abdeckelement 12 wird in Richtung des Pfeils nach Figur 3 bewegt. Der vergrößerte Ausschnitt A nach Figur 4 zeigt eine Dämpfungseinheit 1, die entsprechend der Ausgestaltung nach Figur 1 ausgebildet ist. Die Dämpfungseinheit 1 ist mit einer Wand 15 des Abdeckelementes 13 verbunden. Der Arm 2 befindet sich in einer Ausgangsstellung. In dieser Ausgangsstellung hat der Arm eine Position eingenommen, die geneigt gegenüber einer Vertikalen ist.

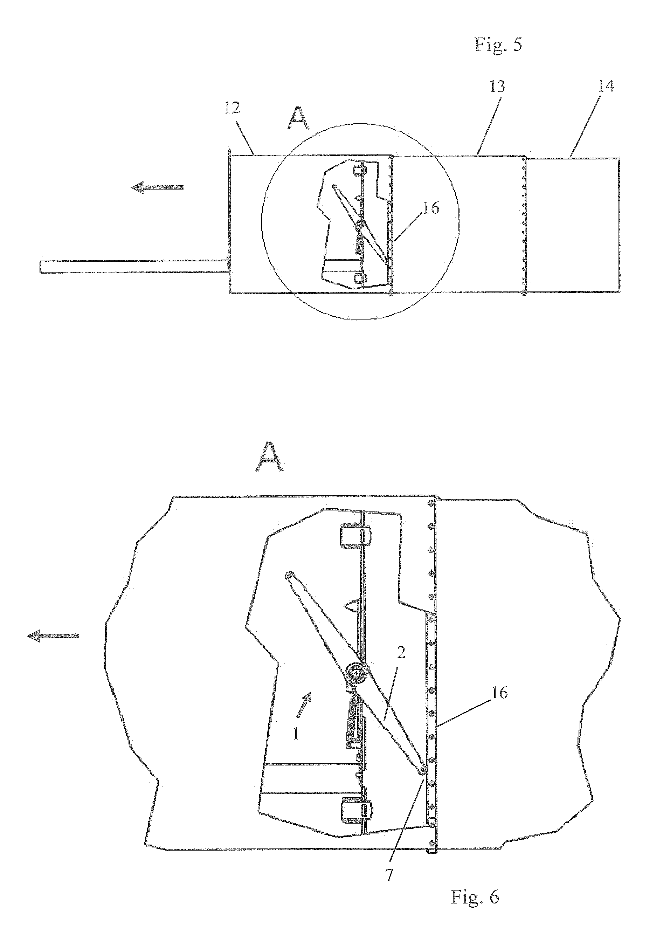

Wird das Abdeckelement 12 in Pfeilrichtung bewegt, so gelangt eine Wand 16 zur Anlage an die Rolle 7 des Armes 2, wie dies aus der Figur 5, insbesondere aus der Figur 6, ersichtlich ist. Wird das Element 12 weiter in Pfeilrichtung bewegt, so rollt die Rolle 7 an der Wand 16. Der Arm 2 wird um die Achse 5 verschwenkt. Während des Verschwenkvorgangs wird die Dämpfungseinheit aktiviert, so dass Impulse, Schläge vermieden werden.

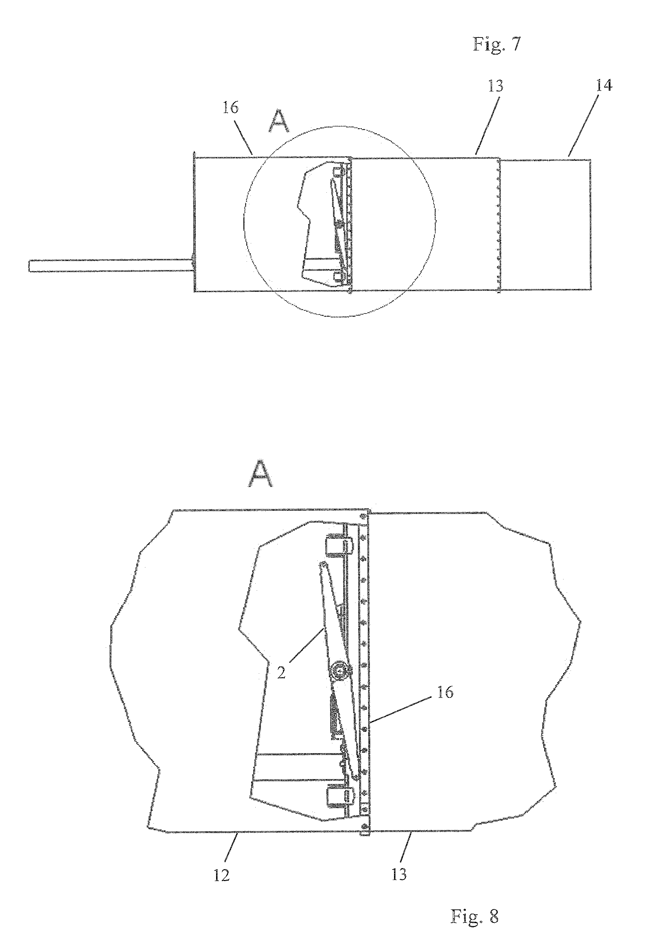

Die Figuren 7 and 8 zeigen die Endposition des Armes, wenn das Abdeckelement 12 vollständig ausgefahren wurde.

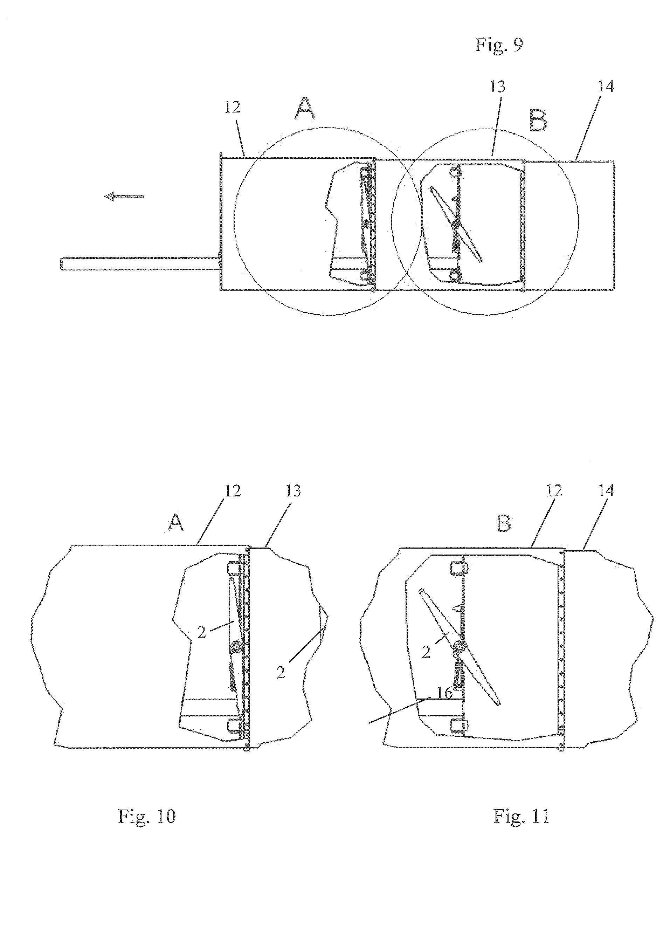

Wird die Abdeckung weiter bewegt, so gelangen die weiteren Dämpfungseinheiten 1, die an den entsprechenden Abdeckelementen angeordnet sind, in Wirkverbindung mit den entsprechenden Abdeckelementen, wie dies aus den Figuren 9 bis 11 ersichtlich ist.

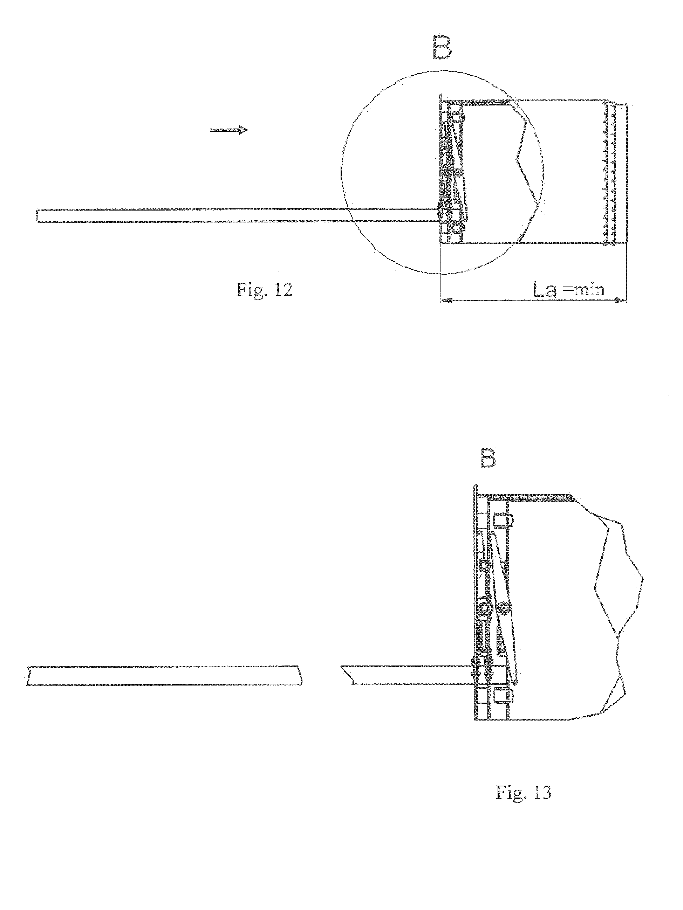

Figuren 12 und 13 zeigen eine Abdeckung im zusammen geschobenen Zustand. Die Abdeckelemente 12, 13 und 14 sind ineinander geschoben. Beim Zusammenschieben wirken die Dämpfungseinheiten 1, die an den entsprechenden Abdeckelementen angeordnet sind, in einer entsprechenden Weise, so dass die Schläge oder Impulse beim Zusammenschieben der Abdeckelemente vermieden werden.

Dadurch, dass das Dämpfungselement als eine Mehrscheiben-Bremse ausgebildet ist, wird auch erreicht, dass beim Zusammenschieben bzw. Auseinanderziehen der Abdeckelemente es zu keinen Überschwingungen kommt. Andererseits ist im Ruhezustand jede Position des Armes vorspannungsfrei. Dies hat auch den Vorteil, dass für Transport und Montage die teleskopierbare Abdeckung auf ihre minimale Größe zusammengeschoben werden kann. Auch außerhalb des Dämpfungsweges kann die Bewegung der Abdeckungen vollständig kräftefrei folgen.

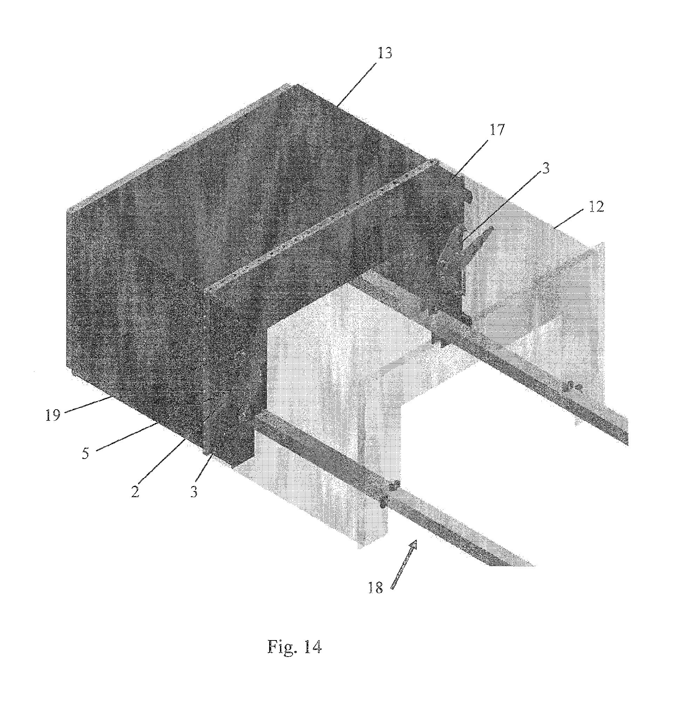

Figur 14 zeigt schematisch und perspektivisch zwei Abdeckelemente 12, 13. Aus der Darstellung ist ersichtlich, dass das Abdeckelement 13 eine Vorderwand 17 aufweist. Beidseits der Führungsbahn 18 sind an der Vorderwand 17 Dämpfungseinheiten 1 angeordnet. Hierzu ist die Halteplatte 2 an der Vorderwand 17 festgelegt. Die Arme 2 sind um eine quer zur Verfahrrichtung bzw. Längsrichtung der Führungsbahn 18 verschwenkbare Achsen 5 verschwenkbar. Die Arme erstrecken sich im Wesentlichen in Längsrichtung der Führungsbahn 18. Das Abdeckelement 12 weist einen Anschlag 19 auf, der leistenförmig ausgebildet ist. Der Anschlag 19 gelangt zur Anlage an die Rolle 6 des Arms 2.

### Bezugszeichenliste

- 1: Dämpfungseinheit
- 2: Arm
- 3: Halteplatte
- 4: Dämpfungselement
- 5: Achse
- 6: Rolle
- 7: Rolle
- 8: Rückzugfeder
- 9: Dämpfer
- 10: Anschlag
- 11: Lasche
- 12,13,14: Abdeckelement
- 15: Wand
- 16: Wand
- 17: Vorderwand
- 18: Führungsbahnd
- 19: Anschlag

## Patentansprüche

1. Abdeckung, insbesondere für einen Arbeitsbereich einer Werkzeugmaschine, umfassend wenigstens eine teleskopierbare Abdeckeinheit, welche wenigstens zwei Abdeckelemente (12, 13, 14) aufweist, wobei wenigstens ein Abdeckelement (12, 13, 14) wenigstens eine Dämpfungseinheit (1) aufweist, **dadurch gekennzeichnet, dass** Dämpfungseinheit (1) eine Halteplatte (1), die mit einer Wand (17) eines Abdeckelementes (13) verbunden ist, einen um eine Achse (5) verschwenkbaren Arm (2), der zu Anlage an einen Anschlag (19) eines benachbarten Abdeckelementes (12) bringbar ist, und ein an der Halteplatte (3) befestigtes Dämpfungselement (4) aufweist, wobei das Dämpfungselement (4) während eines Verschwenkens des Armes (2) auf die Achse (5) ein Bremsmoment ausübt.

2. Abdeckung nach Anspruch 1, **dadurch gekennzeichnet, dass** wenigstens ein Endbereich des Arms (2) mit einem Gleitelement versehen ist.

3. Abdeckung nach Anspruch 1, **dadurch gekennzeichnet, dass** wenigstens ein Endbereich des Arms (2) mit einer Rolle (6, 7) versehen ist.

4. Abdeckung nach Anspruch 1, 2 oder 3, **dadurch gekennzeichnet, dass** die Halteplatte (3) einen Dämpfer (9) aufweist, an den der Arm (2) bringbar ist.

5. Abdeckung nach wenigstens einem der vorhergehenden Ansprüche 1 bis 4, **dadurch gekennzeichnet, dass** das Dämpfungselement (4) eine Mehrscheiben-Bremse ist.

6. Abdeckung nach wenigstens einem der vorhergehenden Ansprüche 1 bis 4, **dadurch gekennzeichnet, dass** das Dämpfungselement (4) eine hydrodynamische Bremse ist.
